# EUROPÄISCHE PATENTANMELDUNG

(11) **EP 2 246 967 A1**
(43) Veröffentlichungstag der Anmeldung: **03.11.2010**
(21) Anmeldenummer: 09005960.1
(22) Anmeldetag: 30.04.2009
(51) Int. Cl.: H02M 7/00

(54) **Wechselrichter mit eingebautem Stromzähler**

(71) Anmelder: SMA Solar Technology AG, 34266 Niestetal (DE)
(72) Erfinder: Andrae, Ralf, 34379 Calden (DE); Frees, Wolfgang, 34131 Kassel (DE)
(74) Vertreter: Walther, Walther & Hinz GbR

(57) **Zusammenfassung**

Gegenstand der Erfindung ist ein Wechselrichter für einen Stromgenerator, insbesondere einen PV-Generator, mit einem im Gehäuse (1) des Wechselrichters angeordneten eichfähigen Stromzähler (20) zur Erfassung der vom Generator abgegebenen Leistung.

## Beschreibung

Die vorliegende Erfindung betrifft einen Wechselrichter für einen Stromgenerator, insbesondere einen PV-Generator.

Wechselrichter dienen bei der Nutzung insbesondere alternativer Energiequellen, wie z. B. PV-Modulen, dazu, Gleichstrom in Wechselstrom umzuwandeln. Ein solcher Wechselrichter weist ein Gehäuse auf, wobei in dem Gehäuse sowohl leistungselektronische Bauteile angeordnet sind als auch beispielsweise eine Kommunikationseinheit. Die leistungselektronischen Bauteile umfassen üblicherweise eine Grundplatine. Das Gehäuse des Wechselrichters umfasst des Weiteren mindestens einen Deckel, um die einzelnen Kammern, und hier insbesondere die Kammer, die die leistungselektronischen Bauteile aufnimmt, zu verschließen.

Ein solcher Wechselrichter ist beispielsweise aus der EP 2 006 988 A1 bekannt.

Nun ist ebenfalls bereits bekannt, in den Wechselrichtern Schaltungen vorzusehen, mit denen der Ertrag des Gerätes erfasst werden kann. Bedingt durch die Toleranzen der Hardware und der auf der Hardware implementierten Verfahren der Messsoftware, sind diese Ertragsmessungen mit Fehlern in der Größenordnung von 2 % behaftet, die zusätzlich auch noch vom Leistungsbereich abhängen. Die mit den im Wechselrichter eingebauten Schaltungen gemessenen Ertragswerte weichen von den Werten, die mit geeichten EVU-Zählern ermittelt werden, stark ab, da diese ebenfalls einen Fehler von bis zu 2 % aufweisen können. Das heißt, es sind in jedem Fall geeichte EVU-Zähler erforderlich, die dem Wechselrichter zum Netz hin nachgeschaltet sind.

Für den Betrachter entsteht dadurch der Nachteil, dass er einerseits Abweichungen zwischen den beiden Zählern hinnehmen muss und andererseits einen separaten, vom EVU auf Grund seiner Zertifizierung akzeptierten Stromzähler gesondert zum Wechselrichter installieren muss, was einen erhöhten Montageaufwand mit sich bringt.

Um den Montageaufwand zu minimieren, wird insofern erfindungsgemäß ein Wechselrichter vorgeschlagen, der sich dadurch auszeichnet, dass im Gehäuse des Wechselrichters ein eichfähiger Stromzähler angeordnet ist, um die vom Generator abgegebene Leistung zu erfassen. Das heißt, dass ummittelbar mit Installation des Wechselrichters auch der Stromzähler mit installiert ist. Insbesondere dadurch, dass der Stromzähler lösbar im Gehäuse des Wechselrichters angeordnet ist, ist im Bedarfsfall ein einfacher Austausch problemlos möglich. Dadurch, dass der Stromzähler unmittelbar im Wechselrichter installiert ist, und hier insbesondere auf der Grundplatine aufsitzt bzw. mit dieser in elektrischer Verbindung steht, wird des Weiteren die Möglichkeit eröffnet, per Differenzbildung mit der in das Netz eingespeisten Leistung auch die PV-Leistung zu ermitteln, die der Betreiber gegebenenfalls selbst verbraucht. Dies ist insofern von Interesse, als nach dem neuen Energie-Einspeise-Gesetz (EEG) auch der Eigenverbrauch des Betreibers einer PV-Anlage vergütet wird. Vorteilhaft an der Unterbringung des Stromzählers im Gehäuse des Wechselrichters ist weiterhin, dass der Stromzähler selbst geschützt untergebracht ist.

Des Weiteren ist vorgesehen, dass der Stromzähler als elektronischer Stromzähler ausgebildet ist, was zu kleineren Gehäuseabmessungen des Stromzählers führt. Insbesondere ist in diesem Zusammenhang vorgesehen, dass durch den Einsatz von Power-Meter-Chips eine bessere Anpassung der Größe des Zählers an die mechanischen Gegebenheiten in dem Wechselrichter erfolgen kann. Das heißt, dass durch den Einsatz derartiger Chips die Messeinrichtung, also der Zähler, relativ klein baut. Dies ermöglicht eine leichtere Unterbringung im Gehäuse des Wechselrichters.

Nach einem weiteren Merkmal der Erfindung weist der Stromzähler mindestens ein Interface auf, um hierdurch die Möglichkeit der Fernabfrage und/oder der Steuerung von Verbrauchern vorzunehmen. Das heißt, dass durch ein solches Interface in Abhängigkeit von der momentan abgegebenen Leistung die entsprechenden Verbraucher eingeschaltet werden können. Darüber hinaus kann ein weiteres Interface vorgesehen sein, um über die Kommunikationseinheit des Wechselrichters selbst nicht nur den Wechselrichter zu überwachen, sondern auch den Stromzähler. Hierbei beinhaltet 'Überwachen' gegebenenfalls auch das Ablesen des Stromzählers.

Im Einzelnen ist vorgesehen, dass der Stromzähler elektrische Anschlusselemente zur lösbaren Verbindung mit der Grundplatine des Wechselrichters aufweist. Dies können beispielsweise federbelastete Kontaktstifte sein, die nach Aufsetzen des Wechselrichters auf die Halterung des Stromzählers im Gehäuse des Wechselrichters unmittelbar in Kontakt mit den entsprechenden Kontaktpunkten auf der Platine gelangen.

Des Weiteren weist das Wechselrichtergehäuse mindestens einen Deckel auf, wie dies bereits beschrieben worden ist, wobei der mindestens eine Deckel den Stromzähler abdeckt, allerdings ein Fenster zum Ablesen des Stromzählers aufweist.

Anhand der Zeichnungen wird die Erfindung beispielhaft näher erläutert.
- Figur 1: zeigt ein Wechselrichtergehäuse mit abgenommenem Deckel;
- Figur 2: zeigt einen Schnitt gemäß der Linie II - II aus Figur 1.

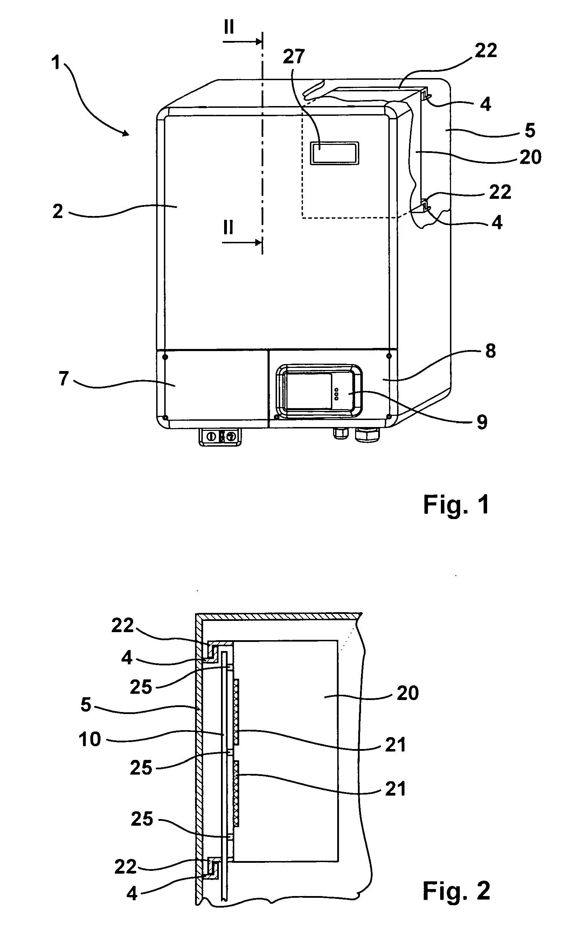

Das insgesamt mit 1 bezeichnete Wechselrichtergehäuse umfasst die Kammer 2, die u. a. auch die Grund- oder Hauptplatine 10 aufnimmt (Figur 2). Im Gehäuse 1 des Wechselrichters befindet sich der insgesamt mit 20 bezeichnete Zähler. Der Zähler 20 zeigt, wie sich dies insbesondere aus Figur 2 ergibt, endseitig hakenförmige Halterungen 22, die an entsprechenden Aufnahmen 4 an der Rückwand 5 des Wechselrichtergehäuses befestigt sind. Der Zähler 20 weist darüber hinaus an der Rückwand Kontakte 25 auf, die in Verbindung mit der Platine 10 stehen. Die Kontakte 25 können beispielsweise federbelastete Stifte sein, die nach Einsetzen des Wechselrichters in Kontakt mit den entsprechenden Kontaktpunkten auf der Platine gelangen. An dem Zähler 20 selbst sind sieben solcher Kontakte vorgesehen, nämlich jeweils drei Phasen für Ein- und Ausgang sowie einen Neutralleiter. Der Zähler 20 besitzt darüber hinaus auf der Vorderseite ein Display 27, auf dem die vom Generator abgegebene und genauere Leistung ersichtlich ist. Das Gehäuse 1 des Stromrichters umfasst darüber hinaus weitere Kammern 7 und 8, die anderen Zwecken dienen. So ist die Kammer 7 z. B. als DC-seitige Anschlusskammer ausgebildet, wohingegen die Kammer 8 den AC-seitigen Netzanschluss sowie die Kommunikationseinheit 9 mit Display aufweist. Hierbei ist denkbar, die Kommunikationseinheit 9 des Wechselrichters mit dem Stromzähler 20 durch ein Interface 21 zu verbinden, so dass die Kommunikation des Stromzählers 20 über die Kommunikationseinheit 9 des Wechselrichters erfolgt.

## Patentansprüche

1. Wechselrichter für einen Stromgenerator, insbesondere einen PV-Generator,
**gekennzeichnet durch**
ein im Gehäuse (1) des Wechselrichters angeordneten eichfähigen Stromzähler (20) zur Erfassung der vom Generator abgegebenen Leistung.

2. Wechselrichter nach Anspruch 1,
**dadurch gekennzeichnet,**
**dass** der Stromzähler (20) zum leichten Austausch als Einheit lösbar in dem Gehäuse (1) des Wechselrichters angeordnet ist.

3. Wechselrichter nach einem der voranstehenden Ansprüche,
**dadurch gekennzeichnet,**
**dass** der Stromzähler (20) als elektronischer Zähler ausgebildet ist.

4. Wechselrichter nach einem der voranstehenden Ansprüche,
**dadurch gekennzeichnet,**
**dass** der Stromzähler (20) mindestens ein Interface (21) aufweist.

5. Wechselrichter nach einem der voranstehenden Ansprüche,
**dadurch gekennzeichnet,**
**dass** der Stromzähler (20) elektrische Anschlusselemente (25) zur lösbaren Verbindung mit der Grundplatine (10) des Wechselrichters aufweist.

6. Wechselrichter nach einem der voranstehenden Ansprüche,
**dadurch gekennzeichnet,**
**dass** der Wechselrichter zur Halterung des Stromzählers (20) im Bereich der Grundplatine (10) Haltemittel (22), z. B. Krallen, zum Einhängen in das Gehäuse (1) des Wechselrichter aufweist.

7. Wechselrichter nach einem der voranstehenden Ansprüche,
**dadurch gekennzeichnet,**
**dass** das Wechselrichtergehäuse (1) mindestens einen Deckel aufweist, wobei der mindestens eine Deckel den Stromzähler (20) abdeckt und ein Fenster zum Ablesen des Stromzählers (20) aufweist.

8. Wechselrichter nach einem der voranstehenden Ansprüche,
**dadurch gekennzeichnet,**
**dass** der Wechselrichter eine Kommunikationseinheit (9) aufweist, wobei der Stromzähler (20) mit der Kommunikationseinheit (9) des Wechselrichters durch ein Interface (21) in Verbindung steht.

## Geänderte Patentansprüche

### Geänderte Patentansprüche gemäss Regel 137(2) EPÜ.

**1.** Wechselrichter für einen Stromgenerator, insbesondere einen PV-Generator, mit einem im Gehäuse (1) des Wechselrichters angeordneten Stromzähler (20) zur Erfassung der vom Generator abgegebenen Leistung,
**dadurch gekennzeichnet,**
**dass** der Stromzähler (20) eichfähig ist,
**dass** der Stromzähler (20) mindestens ein Interface (3) zur Fernabfrage des Stromzählers aufweist.

**2.** Wechselrichter nach Anspruch 1,
**dadurch gekennzeichnet,**
**dass** der Stromzähler (20) zum leichten Austausch als Einheit lösbar in dem Gehäuse (1) des Wechselrichters angeordnet ist.

**3.** Wechselrichter nach einem der voranstehenden Ansprüche,
**dadurch gekennzeichnet,**
**dass** der Stromzähler (20) als elektronischer Zähler ausgebildet ist.

**4.** Wechselrichter nach einem der voranstehenden Ansprüche,
**dadurch gekennzeichnet,**
**dass** der Stromzähler (20) elektrische Anschlusselemente (25) zur lösbaren Verbindung mit der Grundplatine (10) des Wechselrichters aufweist.

**5.** Wechselrichter nach einem der voranstehenden Ansprüche,
**dadurch gekennzeichnet,**
**dass** der Wechselrichter zur Halterung des Stromzählers (20) im Bereich der Grundplatine (10) Haltemittel (22), z. B. Krallen, zum Einhängen in das Gehäuse (1) des Wechselrichter aufweist.

**6.** Wechselrichter nach einem der voranstehenden Ansprüche,
**dadurch gekennzeichnet,**
**dass** das Wechselrichtergehäuse (1) mindestens einen Deckel aufweist, wobei der mindestens eine Deckel den Stromzähler (20) abdeckt und ein Fenster zum Ablesen des Stromzählers (20) aufweist.

**7.** Wechselrichter nach einem der voranstehenden Ansprüche,
**dadurch gekennzeichnet,**
**dass** der Wechselrichter eine Kommunikationseinheit (9) aufweist, wobei der Stromzähler (20) mit der Kommunikationseinheit (9) des Wechselrichters durch ein Interface (21) in Verbindung steht.
